# EUROPEAN PATENT APPLICATION

(11) **EP 2 447 331 A1**
(43) Date of publication of application: **02.05.2012**
(21) Application number: 11187112.5
(22) Date of filing: 28.10.2011
(51) Int. Cl.: C09J 7/02, H01M 2/08, C08L 23/22, C09J 123/22

(54) **Pressure-sensitive adhesive tape for battery**

(30) Priority: 29.10.2010 JP 2010243324
(71) Applicant: Nitto Denko Corporation, Osaka 567-8680 (JP)
(72) Inventor: Iwata, Jun, Ibaraki-shi, Osaka 567-8680 (JP); Hanai, Hiroomi, Ibaraki-shi, Osaka 567-8680 (JP); Shintani, Toshio, Ibaraki-shi, Osaka 567-8680 (JP)
(74) Representative: Grünecker, Kinkeldey, Stockmair & Schwanhäusser

(57) **Abstract**

The present invention relates to a pressure-sensitive adhesive tape for a battery, containing: a substrate; and a pressure-sensitive adhesive layer laminated on at least one surface of the substrate, in which the pressure-sensitive adhesive layer contains a rubber component in the content of 70 wt% or more, and the rubber component has a weight average molecular weight of 300,000 to 5,000,000, and in which the pressure-sensitive adhesive layer is laminated at an inner portion of 0.5 mm or more from both edges of the substrate, with a thickness of 1 to 25 µm.

## Description

### TECHNICAL FIELD

The present invention relates to a pressure-sensitive adhesive tape for batteries, and more particularly, to a pressure-sensitive adhesive tape that is used for preventing a short-circuit by attaching the tape to an inside of the batteries such as a lithium ion battery.

### BACK GROUND ART

Recently, a secondary battery such as a lithium ion battery is indispensable as an electric source of mobile devices such as a cellular phone or a laptop computer. In addition, since the lithium ion battery has high capacity and light weight, the lithium ion battery is expected to be used as a battery for electric vehicles, and it has been required to make a higher capacity battery from now on.

As the capacity of the lithium ion battery becomes higher, especially in the case of the winding type batteries, the number of windings of the winding electrode plate tends to be increased. Therefore, a thinner separator is mainly used. However, there is a problem that, in the manufacturing process, a hole may be formed in the separator by a very small impurity incorporated into the battery or by a burr existing on the electrode plate. It may cause a short-circuit between a positive-electrode plate and a negative-electrode plate, thereby generating a heat to cause, for example, a fire accident.

For preventing an inner short-circuit, there is a method for preventing hole formation when a thin separator comes in contact with a burr, by attaching a pressure-sensitive adhesive tape to an electrode plate end or an electrode terminal on which the burr exists (Patent Document 1).

In particular, in the case of winding type batteries, a pressure-sensitive adhesive tape is used around a lead of an electrode disposed in an inner part of a winding structure of the battery. In this case, because a high internal pressure is applied to the inner part of the winding structure, a pressure-sensitive adhesive layer of the pressure-sensitive adhesive tape is easily deformed, and glue (a pressure-sensitive adhesive layer) of the pressure-sensitive adhesive tape is easily extruded from a substrate. Then, the glue that has extruded from the substrate of the pressure-sensitive adhesive tape comes in contact with an electrolytic solution. Because the vicinity of the leads has the highest reactivity in the battery, the glue reacts with an electrolyte in the electrolytic solution, and thus the electrolytic solution deteriorates, which leads to degraded characteristics of the batteries. More particularly, when a pressure-sensitive adhesive tape having an acrylic pressure-sensitive adhesive layer is used in the manufacture of the battery, crosslinking points and functional groups in the acrylic pressure-sensitive adhesive layer may chemically react with an electrolyte in an electrolytic solution during repeated charging/discharging processes under a high-voltage condition, which leads to deterioration of the batteries. That is a problem.

Patent Document 2 discloses that, when a pressure-sensitive adhesive tape obtained by forming a pressure-sensitive adhesive layer containing a polyisobutylene rubber and a saturated hydrocarbon resin on a substrate film which the substrate film is stable to an organic electrolytic solution, is used in the manufacture of secondary batteries such as a lithium ion battery using the organic electrolytic solution, the battery does not deteriorate, and can be maintained at a high output level. However, in the saturated hydrocarbon resin which has been used to impart an adhesive property, complete removal of the impurities having a double bond in its structure is not easy due to the manufacturing reasons, and the battery slowly deteriorates during the repeated charging/discharging processes under a high-voltage condition. Since the reactivity between the pressure-sensitive adhesive layer and the electrolytic solution in a battery may increase in the battery having higher capacity and higher output, deterioration of the electrolytic solution may more easily occur, which makes it difficult to maintain the output of the battery. That is a problem.

Patent Document 1: JP-A-10-247489 A
Patent Document 2: JP-A-9-165557 A

### SUMMARY OF THE INVENTION

An object of the present invention is to provide a pressure-sensitive adhesive tape for batteries which the tape are to be attached to an electrode plate or the like to prevent a short-circuit between electrodes due to the presence of burrs in the electrode plate, in which the tape can suppress deterioration of an electrolytic solution caused when glue is extruded from a substrate of the pressure-sensitive adhesive tape for batteries.

In order to solve the above problems, the present inventors have made intensive investigations and have found that, since a pressure-sensitive adhesive layer containing a rubber component having a certain molecular weight distribution in the content of 70 wt% or more has a suitable adhesive property and also exhibits a high cohesive property, that the pressure-sensitive adhesive layer is not easily deformed even under a high-pressure condition and is not easily eluted into the electrolytic solution, and that the pressure-sensitive adhesive layer has low reactivity with the electrolytic solution even when it is eluted into the electrolytic solution, so that deterioration of the electrolytic solution may be significantly suppressed.

The present inventors have also found that a pressure-sensitive adhesive tape obtained by laminating the pressure-sensitive adhesive layer, which has the above-described configuration and has a certain thickness, on a substrate while leaving a pressure-sensitive adhesive layer non-laminated portion having a certain width on both edges of the substrate, hardly allows glue to expand from the substrate, that the glue is not easily eluted to an electrolytic solution even if the tape is used under a high-pressure condition such as the inside of the battery, and that even if the glue is eluted to the electrolytic solution, the electrolytic solution does not easily deteriorate, so that, when the tape is used as a pressure-sensitive adhesive tape for batteries, deterioration of the electrolytic solution can be significantly suppressed and the output of the battery can be maintained at a high level. The present invention has been accomplished on the basis of the above knowledge.

That is, the present invention provides a pressure-sensitive adhesive tape for a battery, containing:
a substrate; and
a pressure-sensitive adhesive layer laminated on at least one surface of the substrate,
in which the pressure-sensitive adhesive layer contains a rubber component in the content of 70 wt% or more, and the rubber component has a weight average molecular weight of 300,000 to 5,000,000, and
in which the pressure-sensitive adhesive layer is laminated at an inner portion of 0.5 mm or more from both edges of the substrate, with a thickness of 1 to 25 µm.
In the present invention, the weight average molecular weight is used in terms of a weight average molecular weight of a standard polystyrene.

A rubber component preferably contains a polyisobutylene rubber.

The pressure-sensitive adhesive tape for batteries according to the present invention is preferably attached to an electrode terminal and/or an electrode plate end, or a portion of a separator with which the electrode plate end comes in contact.

According to the pressure-sensitive adhesive tape for batteries according to the present invention, by attaching the tape to an electrode plate or the like of the battery having a winding type electrode structure, it is possible to prevent burrs from piercing a separator and causing a short-circuit between electrodes, whereby high stability and reliability can be imparted to the battery. Further, since the pressure-sensitive adhesive layer of the pressure-sensitive adhesive tape for batteries according to the present invention has the above-described configuration, the pressure-sensitive adhesive layer is not easily deformed even when it is used under a high pressure condition such as the inside of the winding type electrode structure, and thus glue is not easily extruded from the substrate. Therefore, the elution of the glue into the electrolytic solution can be significantly suppressed. In addition, since the glue has low reactivity with an electrolyte in the electrolytic solution, deterioration of the electrolytic solution can be suppressed even when the glue is eluted into the electrolytic solution, so that it is possible to maintain the output level of the battery at a high level. Accordingly, the pressure-sensitive adhesive tape for batteries according to the present invention can be suitably used for batteries having high output and capacity.

Furthermore, the pressure-sensitive adhesive tape for batteries according to the present invention hardly allows glue to be extruded from the substrate when the tape is wound in a roll form (i.e., when a pressure is applied) in a manufacturing process, therefore contamination of the product line can be prevented and a decrease in yield due to the attachment of impurities to an edge of the pressure-sensitive adhesive tape can be also prevented. Therefore, the pressure-sensitive adhesive tape for batteries according to the present invention has excellent productivity.

### BRIEF DESCRIPTION OF THE DRAWINGS

FIG. 1 is a schematic cross-sectional view showing one embodiment of a pressure-sensitive adhesive tape for batteries according to the present invention.
FIG. 2 is a schematic cross-sectional view showing another embodiment of a pressure-sensitive adhesive tape for batteries according to the present invention.
FIGs. 3A to 3C are schematic views showing an example of the use of the pressure-sensitive adhesive tape for batteries according to the present invention in a lithium ion battery: FIG. 3A is a diagram before use; FIG. 3B is a diagram showing attachment of the pressure-sensitive adhesive tape for batteries according to the present invention to an electrode plate or the like; and FIG. 3C is a diagram showing the electrode plate wound and fixed using the pressure-sensitive adhesive tape for batteries according to the present invention.

### DESCRIPTION OF REFERENCE NUMERALS AND SIGNS

- 1:: Substrate
- 2A, 2B:: Pressure-sensitive adhesive layer
- 3, 3A, 3B:: Pressure-sensitive adhesive tape for batteries
- L^{a1}, L^{a2}, L^{b1}, L^{b2}:: Width of pressure-sensitive adhesive layer non-laminated portion
- 4:: Electrode terminal
- 5:: Positive-electrode plate
- 6:: Negative-electrode plate
- 7:: Separator
- 8:: Active material

### MODE FOR CARRYING OUT THE INVENTION

Hereinafter, embodiments of the present invention will be described in detail with reference to the drawings, as necessary.

The pressure-sensitive adhesive tape for batteries according to the present invention contains a substrate, and a pressure-sensitive adhesive layer laminated on at least one surface of the substrate. In this case, the pressure-sensitive adhesive layer contains a rubber component in the content of 70 wt% or more, and the rubber component has a weight average molecular weight of 300,000 to 5,000,000. Further, the pressure-sensitive adhesive layer is laminated at an inner point of 0.5 mm or more from both edges of the substrate with a thickness of 1 to 25 µm.

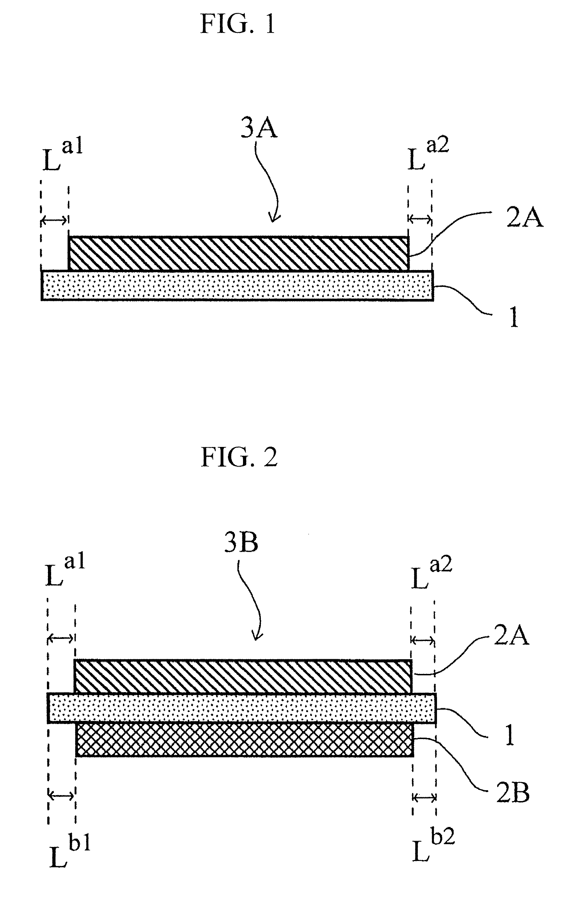

FIG. 1 is a schematic cross-sectional view showing one embodiment (pressure-sensitive adhesive tape 3A for batteries) of a pressure-sensitive adhesive tape 3 for batteries according to the present invention. Here, non-laminated portions of the pressure-sensitive adhesive layer having widths L^{a1} and L^{a2} (mm) are formed on both edges of one surface of the substrate 1, respectively, and a pressure-sensitive adhesive layer 2A is installed on one surface of a substrate 1 while pressure-sensitive adhesive layer non-laminated portions having widths of L^{a1} and L^{a2} (mm), respectively, are leaved on both edges of the substrate 1. The widths L^{a1} and L^{a2} (mm) may be the same as or different from each other.

FIG. 2 is a schematic cross-sectional view showing another embodiment (pressure-sensitive adhesive tape 3B for batteries) of a pressure-sensitive adhesive tape 3 for batteries according to the present invention. Here, pressure-sensitive adhesive layers 2A and 2B are installed on both surfaces of a substrate 1 while pressure-sensitive adhesive layer non-laminated portions having widths L^{a1}, L^{a2}, L^{b1} and L^{b2} (mm), respectively, are leaved on both edges of the both surfaces of the substrate 1. Here, the pressure-sensitive adhesive layers 2A and 2B may be the same as or different from each other in terms of these compositions and thicknesses. Further, the widths L^{a1}, L^{a2}, L^{b1} and L^{b2} (mm) may be the same as or different from each other.

### [Pressure-sensitive adhesive layer]

The pressure-sensitive adhesive layer according to the present invention contains a rubber component in the content of 70 wt% or more. When the content of the rubber component is less than this range, it is not preferred because components constituting the pressure-sensitive adhesive layer may be easily eluted into the electrolytic solution, which makes it difficult to suppress deterioration of the electrolytic solution.

Examples of the rubber component include natural rubbers or various synthetic rubbers. Examples of the synthetic rubbers include polyisoprene rubber, styrene/butadiene (SB) rubber, styrene-isoprene (SI) rubber, styrene-isoprene-styrene block copolymer (SIS) rubber, styrene-butadiene-styrene block copolymer (SBS) rubber, styrene-ethylenebutylene-styrene block copolymer (SEBS) rubber, styrene-ethylene-propylene-styrene block copolymer (SEPS) rubber, styrene-ethylene-propylene block copolymer (SEP) rubber, reclaimed rubber, butyl rubber, polyisobutylene rubber, or modificates thereof.

In the present invention, among these, a polyisoprene rubber, styrene-ethylenebutylene-styrene block copolymer (SEBS) rubber, styrene-ethylene-propylene-styrene block copolymer (SEPS) rubber, butyl rubber, polyisobutylene rubber or the like may be preferably used in view of the fact that they are more hard to be eluted into an electrolytic solution, and even when they are eluted into the electrolytic solution, the reactivity with an electrolyte in the electrolytic solution is relatively low, therefore, deterioration of the electrolytic solution can be prevented more appropriately. In particular, polyisobutylene rubber may be preferably used.

The rubber component has a weight average molecular weight of 300,000 to 5,000,000 (preferably, 300,000 to 2,500,000). When the weight average molecular weight of the rubber component is less than this range, a cohesive property of the pressure-sensitive adhesive layer is degraded, and thus glue is easily extruded from the substrate. Meanwhile, when the weight average molecular weight of the rubber component exceeds this range, the adhesive property may be degraded.

The rubber component preferably contains a high molecular weight rubber component having a molecular weight of 200,000 to 5,500,000 (more preferably, 200,000 to 3,000,000) in the content of 70 wt% or more of the entire rubber components. Particularly, the rubber component preferably contains the above high molecular weight rubber component in the content of 70 wt% or more of the entire rubber components, and further contains a low molecular weight rubber component having a molecular weight of less than 200,000 in the content of approximately 0 to 30 wt% of the entire rubber components, in view of the fact that the above rubber component has an excellent cohesive property, glue is not easily eluted from the substrate, and the rubber component exhibits a high adhesive property.

Since the pressure-sensitive adhesive tape for batteries according to the present invention contains a pressure-sensitive adhesive layer containing a rubber component in the content of 70 wt% or more, it is possible to significantly prevent the elution into the electrolytic solution. Especially, in the case that the pressure-sensitive adhesive layer contains a polyisobutylene rubber as the rubber component, deterioration of the electrolytic solution can be prevented. This is because the polyisobutylene rubber has a low degree of unsaturation and does not have a functional group, and therefore, even when the polyisobutylene rubber is eluted into the electrolytic solution, the reactivity with an electrolyte in the electrolytic solution is quite low.

In the pressure-sensitive adhesive tape for batteries according to the present invention, the pressure-sensitive adhesive layer may also contain other components than the above pressure-sensitive adhesive component, and, for example, may contain a suitable additive such as a crosslinking agent, a tackifier (for example, a rosin derivative resin, a polyterpen resin, a petroleum-based resin, an oil-soluble phenol resin or the like), a plasticizer, a filler, or an antioxidant.

The pressure-sensitive adhesive layer according to the present invention has a thickness of 1 to 25 µm (preferably, 1 to 20 µm). When the thickness of the pressure-sensitive adhesive layer is less than 1 µm, the adhesive property of the pressure-sensitive adhesive layer becomes insufficient and it is difficult to be used for the purpose of preventing a short-circuit between the electrodes. Meanwhile, when the thickness of the pressure-sensitive adhesive layer exceeds 25 µm, the deformation of the pressure-sensitive adhesive layer or the elution of glue from the substrate may easily occur, and thus the electrolyte may easily deteriorate.

### [Substrate]

The substrate is not particularly limited, and various substrates can be used. There can be utilized an appropriate thin leaf body of, for example, a fiber-based substrate such as cloth, non-woven fabric, felt and net; a paper-based substrate such as various papers; a metal-based substrate such as a metal foil and a metal plate; a plastic-based substrate such as a film or sheet made of various resins; a rubber-based substrate such as a rubber sheet; a foamed body such as a foamed sheet; and laminated bodies thereof. Examples of the material or substance of the plastic-based substrate include polyesters (e.g., polyethylene terephthalate, polyethylene naphthalate, polybutylene terephthalate or polybutylene naphthalate), polyolefines (e.g., polyethylene, polypropylene or ethylene-propylene copolymer), polyvinyl alcohol, polyvinylidene chloride, polyvinyl chloride, vinyl chloride-vinyl acetate copolymer, polyvinyl acetate, polyamide, polyimide, celluloses, fluorine-based resin, polyether, polyether amide, polyphenylene sulfide, polystyrene-based resin (e.g., polystyrene), polycarbonate and polyethersulfone. In the present invention, among these, the substrate which is hard to decompose or to deteriorate in an electrolytic solution is preferred. In particular, the plastic-based substrate such as polyimide, polyphenylene sulfide, and polyolefinee (particularly, polypropylene) are preferable used. The substrate may have a single layer shape or a multilayered shape.

Further, if necessary, in order to increase adhesion with the pressure-sensitive adhesive layer, the surface of the substrate may be subjected to a commonly used surface treatment, for example, oxidation treatment by a chemical or physical method, such as chromic acid treatment, ozone exposure, flame exposure, high pressure rapid exposure, and ionization radiation treatment.

The thickness of the substrate is not particularly limited, but may be, for example, about 8 to 100 µm, preferably 10 to 50 µm. If the thickness of the substrate is smaller than the above range, the strength of the pressure-sensitive adhesive tape becomes excessively low, such that practicability may be damaged. Meanwhile, if the thickness of the substrate is larger than the above range, a volume occupied in the battery may become excessively large, such that it tends to be difficult to implement a high capacity of the battery.

### [Pressure-sensitive adhesive tape for batteries]

The pressure-sensitive adhesive tape for batteries according to the present invention is obtained by laminating a pressure-sensitive adhesive layer on at least one surface of a substrate, in which the pressure-sensitive adhesive layer is laminated on the substrate at an inner portion of 0.5 mm or more from both edges of the substrate. That is, the pressure-sensitive adhesive layer is laminated (coated) on the substrate while leaving pressure-sensitive adhesive layer non-laminated regions (pressure-sensitive adhesive layer non-coated portions) having a width of 0.5 mm or more on both edges of the substrate. When the width of the pressure-sensitive adhesive layer non-laminated portion is less than this range, it is difficult to prevent the extrusion of glue. According to the present invention, among these configurations, the pressure-sensitive adhesive layer is preferably laminated on the substrate at an inner portion of 0.5 to 2.0 mm from both edges of the substrate, that is, the pressure-sensitive adhesive layer non-laminated portions is preferably present on both edges of the substrate to a width of 0.5 to 2.0 mm in view of the fact that the pressure-sensitive adhesive tape can exhibit both an adhesive property and prevention of the extrusion of glue.

The width of the pressure-sensitive adhesive tape for batteries according to the present invention may be suitably adjusted, for example, to a width of approximately 10.0 to 150.0 mm (preferably, approximately 15.0 to 110.0 mm).

As the adhesive property of the pressure-sensitive adhesive tape for batteries according to the present invention, a slippage distance as , for example, measured according to a creep test (in accordance with JIS Z 0237: 2000) is preferably 1.0 mm or less (more preferably, 0.5 mm or less). When the slippage distance exceeds this range, it tends to be difficult to prevent the extrusion of glue.

Examples of a method of forming the pressure-sensitive adhesive tape for batteries according to the present invention include a method that contains preparing a coating solution, if necessary, by diluting the above-mentioned pressure-sensitive adhesive components and optionally an additive with a solvent (for example, toluene, xylene, ethyl acetate and methyl ethyl ketone), and applying the coating solution to a substrate at an inner portion of 0.5 mm or more from both edges thereof, to thereby form a pressure-sensitive adhesive layer, or a method that contains applying the coating solution on an appropriate separator (for example, release paper) to form a pressure-sensitive adhesive layer, and transferring and laminating the pressure-sensitive adhesive layer on a substrate at an inner portion of 0.5 mm or more from both edges of the substrate. In the case of the transfer process, a void may remain at an interface between the pressure-sensitive adhesive layer and the substrate. In this case, the void can be diffused and dissipated by performing heating and pressing treatment by an autoclave treatment or the like.

Moreover, in the pressure-sensitive adhesive tape for batteries according to the present invention, a separator (release liner) may be provided on the surface of the pressure-sensitive adhesive layer in view of protection of the surface of the pressure-sensitive adhesive layer and prevention of blocking. The separator is removed when the pressure-sensitive adhesive tape for batteries according to the present invention is attached to an adherend, but may not necessarily be provided. The separator to be used is not particularly limited, but a known and commonly used release paper or the like may be used. For example, there can be used a substrate having a release layer such as a plastic film or paper, of which surface is treated with a release agent such as silicones, long chain alkyls, fluorines, and molybdenum sulfides; a low adhesive substrate formed of a fluorine-based polymer such as polytetrafluoroethylene, polychlorotrifluoroethylene, polyvinyl fluoride, polyvinylidene fluoride, tetrafluoroethylene-hexafluoropropylene copolymer, and chlorofluoroethylene-vinylidene fluoride copolymer; and a low adhesive substrate formed of a non-polar polymer such as olefine-based resins (for example, polyethylene and polypropylene).

In the case where the pressure-sensitive adhesive tape for batteries according to the present invention is a double-coated pressure-sensitive adhesive tape, the separator may be provided on the surfaces of both of the pressure-sensitive adhesive layers of the pressure-sensitive adhesive tape for batteries according to the present invention. Alternatively, a separator having a rear side release layer may be provided on one pressure-sensitive adhesive surface of the pressure-sensitive adhesive tape, such that the rear side release layer of the separator comes into contact with the surface of the other pressure-sensitive adhesive surface on the opposite surface of the pressure-sensitive adhesive tape by winding the sheet.

The pressure-sensitive adhesive tape for batteries according to the present invention is preferably used for manufacturing batteries in which a non-aqueous electrolytic solution is sealed, such as a lithium ion battery.

The non-aqueous electrolytic solution is not particularly limited, but may include, for example, an electrolytic solution in which a mixed solvent of cyclic carbonates such as propylene carbonate (PC), and ethylene carbonate (EC), and chained carbonates such as dimethyl carbonate (DMC), ethyl methyl carbonate (EMC), and diethyl carbonate (DEC), and lithium salts such as LiPF₆ as an electrolyte are dissolved.

The lithium ion battery has a configuration that a winding type electrode group in which a positive-electrode plate obtained by coating a positive-electrode active material on a positive-electrode core body and a negative-electrode plate obtained by coating a negative-electrode active material on a negative-electrode core body are provided to face each other with a separator therebetween, and they are wound in a vortex form; electrode terminals drawn from the positive-electrode plate and the negative-electrode plate; and an electrolytic solution, are sealed in an external can.

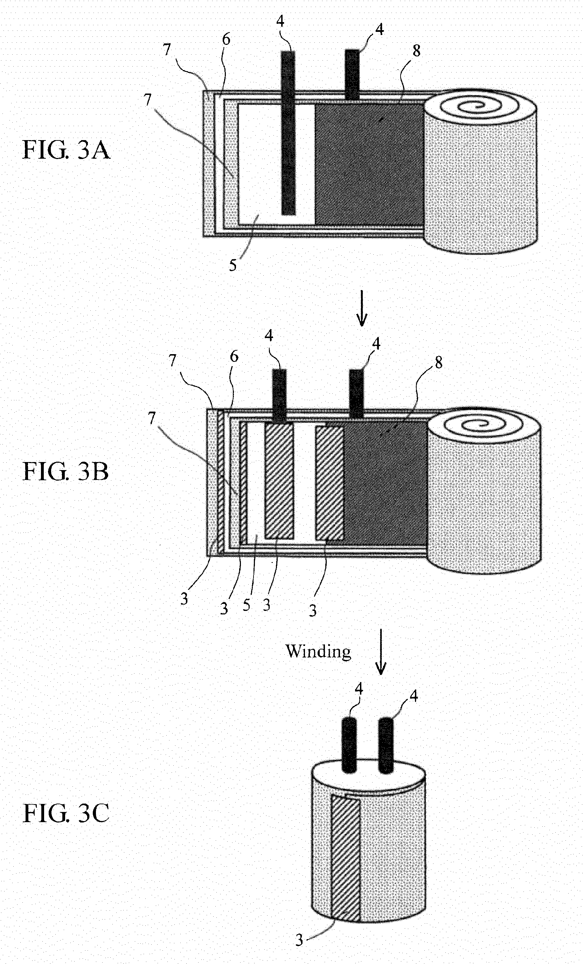

The pressure-sensitive adhesive tape for batteries according to the present invention can be used for the purpose of preventing penetration of impurities or burrs to a separator, and improving an insertion competence of an electrode into a battery case (for example, for the purpose of winding and fixing a winding end of the winding type battery and preventing stripping of the active material), in the manufacturing process of a lithium ion battery. The attachment position is not particularly limited as long as the above object can be accomplished. For example, the pressure-sensitive adhesive tape ispreferably used to be attached to a lithium ion battery (for example, an electrode terminal, an electrode plate end, a portion of the separator with which the electrode plate end comes into contact, an end of the active material and a winding end) (refer to FIG. 3A to 3C).

### EXAMPLES

Hereinafter, the present invention will be described in further detail with referred to the following Examples, but the present invention is not limited thereto.

### Example 1

A coating solution 1 was prepared by diluting 100 parts by weight of polyisobutylene rubber (trade name: "Oppanol B200," manufactured by BASF Japan Ltd.) having a weight average molecular weight of 2,000,000 with toluene.
The obtained coating solution 1 was applied on a polypropylene film having a thickness of 30 µm at an inner portion of 0.5 mm or more from both edges thereof so that the thickness after drying was 15 µm, and drying the solution to thereby obtain a pressure-sensitive adhesive tape 1.

### Example 2

A pressure-sensitive adhesive tape 2 was obtained in the same manner as in Example 1, except that a thickness of a pressure-sensitive adhesive layer after drying was changed from 15 µm to 10 µm.

### Example 3

A pressure-sensitive adhesive tape 3 was obtained in the same manner as in Example 1, except that a thickness of a pressure-sensitive adhesive layer after drying was changed from 15 µm to 2 µm.

### Example 4

A pressure-sensitive adhesive tape 4 was obtained in the same manner as in Example 1, except that a polyisobutylene rubber (trade name: "Oppanol B150," manufactured by BASF Japan Ltd.) having a weight average molecular weight of 1,500,000 was used instead of the polyisobutylene rubber having a weight average molecular weight of 2,000,000.

### Example 5

A pressure-sensitive adhesive tape 5 was obtained in the same manner as in Example 2, except that a polyisobutylene rubber (trade name: "Oppanol B150," manufactured by BASF Japan Ltd.) having a weight average molecular weight of 1,500,000 was used instead of the polyisobutylene rubber having a weight average molecular weight of 2,000,000.

### Example 6

A pressure-sensitive adhesive tape 6 was obtained in the same manner as in Example 3, except that a polyisobutylene rubber (trade name: "Oppanol B150," manufactured by BASF Japan Ltd.) having a weight average molecular weight of 1,500,000 was used instead of the polyisobutylene rubber having a weight average molecular weight of 2,000,000.

### Example 7

A pressure-sensitive adhesive tape 7 was obtained in the same manner as in Example 1, except that a polyisobutylene rubber (trade name: "Oppanol B50," manufactured by BASF Japan Ltd.) having a weight average molecular weight of 500,000 was used instead of the polyisobutylene rubber having a weight average molecular weight of 2,000,000.

### Example 8

A pressure-sensitive adhesive tape 8 was obtained in the same manner as in Example 2, except that a polyisobutylene rubber (trade name: "Oppanol B50," manufactured by BASF Japan Ltd.) having a weight average molecular weight of 500,000 was used instead of the polyisobutylene rubber having a weight average molecular weight of 2,000,000.

### Example 9

A pressure-sensitive adhesive tape 9 was obtained in the same manner as in Example 3, except that a polyisobutylene rubber (trade name: "Oppanol B50," manufactured by BASF Japan Ltd.) having a weight average molecular weight of 500,000 was used instead of the polyisobutylene rubber having a weight average molecular weight of 2,000,000.

### Example 10

A pressure-sensitive adhesive tape 10 was obtained in the same manner as in Example 1, except that 100 parts by weight of a polyisobutylene rubber (trade name: "Oppanol B100," manufactured by BASF Japan Ltd.) having a weight average molecular weight of 1,000,000 and 30 parts by weight of a polyisobutylene rubber (trade name: "Oppanol B12SF," manufactured by BASF Japan Ltd.) having a weight average molecular weight of 120,000 were used instead of 100 parts by weight of the polyisobutylene rubber having a weight average molecular weight of 2,000,000.

### Example 11

A pressure-sensitive adhesive tape 11 was obtained in the same manner as in Example 2, except that 100 parts by weight of a polyisobutylene rubber (trade name : "Oppanol B100," manufactured by BASF Japan Ltd.) having a weight average molecular weight of 1,000,000 and 30 parts by weight of a polyisobutylene rubber (trade name : "Oppanol B12SF," manufactured by BASF Japan Ltd.) having a weight average molecular weight of 120,000 were used instead of 100 parts by weight of the polyisobutylene rubber having a weight average molecular weight of 2,000,000.

### Example 12

A pressure-sensitive adhesive tape 12 was obtained in the same manner as in Example 3, except that 100 parts by weight of a polyisobutylene rubber (trade name: "Oppanol B100," manufactured by BASF Japan Ltd.) having a weight average molecular weight of 1,000,000 and 30 parts by weight of a polyisobutylene rubber (trade name: "Oppanol B12SF," manufactured by BASF Japan Ltd.) having a weight average molecular weight of 120,000 were used instead of 100 parts by weight of the polyisobutylene rubber having a weight average molecular weight of 2,000,000.

### Example 13

A pressure-sensitive adhesive tape 13 was obtained in the same manner as in Example 9, except that a polyimide film having a thickness of 25 µm was used instead of the polypropylene film having a thickness of 30 µm.

### Comparative Example 1

A pressure-sensitive adhesive tape 14 was obtained in the same manner as in Example 1, except that a thickness of a pressure-sensitive adhesive layer after drying was changed from 15 µm to 30 µm.

### Comparative Example 2

A pressure-sensitive adhesive tape 15 was obtained in the same manner as in Example 7, except that a thickness of a pressure-sensitive adhesive layer after drying was changed from 15 µm to 30 µm.

### Comparative Example 3

A pressure-sensitive adhesive tape 16 was obtained in the same manner as in Example 2, except that a polyisobutylene rubber (trade name: "Oppanol B12," manufactured by BASF Japan Ltd.) having a weight average molecular weight of 120,000 was used instead of the polyisobutylene rubber having a weight average molecular weight of 2,000,000.

### Comparative Example 4

A pressure-sensitive adhesive tape 17 was obtained in the same manner as in Example 3, except that a polyisobutylene rubber (trade name: "Oppanol B 12," manufactured by BASF Japan Ltd.) having a weight average molecular weight of 120,000 was used instead of the polyisobutylene rubber having a weight average molecular weight of 2,000,000.

### Comparative Example 5

A pressure-sensitive adhesive tape 18 was obtained in the same manner as in Example 3, except that the pressure-sensitive adhesive layer was installed on an entire surface of the substrate.

### Comparative Example 6

A pressure-sensitive adhesive tape 19 was obtained in the same manner as in Example 12, except that the pressure-sensitive adhesive layer was installed on an entire surface of the substrate.

The pressure-sensitive adhesive tapes obtained in Examples and Comparative Examples were evaluated by the following methods.

### [Glue extrusion prevention test]

The pressure-sensitive adhesive tapes (width; 10 mm, length: 100 mm) obtained in Examples and Comparative Examples were pressed on a metal SUS plate (SUS 430BA) under the following conditions by using a heat press machine (trade name: "TP-701-B heat seal tester vertical temperature control type," manufactured by Tester Sangyo Co., Ltd.), and the presence of the extrusion of the glue from the edges of the pressure-sensitive adhesive tapes was observed by an optical microscope (trade name: "Digital Microscope VHX-100," manufactured by Keyence Corporation). It was evaluated to be "A" when the glue was not extruded, and "B" when the glue was extruded. Further, when the glue was extruded, an extrusion distance was measured, and the maximum value of the extrusion distance was referred to as a glue extrusion distance (mm) of the tape.
Measurement conditions
Temperature: 150°C
Pressure: 0.5 MPa
Compression time: 3 minutes

### [Holding power test]

The holding powers of the pressure-sensitive adhesive tapes (width; 10 mm, length: 100 mm) obtained in Examples and Comparative Examples were evaluated by measuring a slippage distance (mm) under the following conditions using a creep tester (trade name: "Tape Creep Tester," manufactured by Imada Seisakusyo Co., Ltd.) in accordance with JIS Z 20237: 2000. A shorter slippage distance indicates a more excellent holding power.
Measurement conditions
Temperature: 40°C
Load: 600 gf
Holding area: Width 10 mm × Length 20 mm
Holding time: 1 hour

The evaluation results are summarized in the following Tables.

**[Table 1]**

| | Example | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| Total tape thickness (µm) | 45 | 40 | 32 | 45 | 40 | 32 | 45 | 40 | 32 | 45 | 40 | 32 | 27 |
| Glue thickness (µm) | 15 | 10 | 2 | 15 | 10 | 2 | 15 | 10 | 2 | 15 | 10 | 2 | 2 |
| Slippage distance (mm) | 0.4 | 0.2 | 0.1 | 0.4 | 0.2 | 0.1 | 0.4 | 0.2 | 0.1 | 0.4 | 0.2 | 0.1 | 0.2 |
| Glue extrusion prevention | A | A | A | A | A | A | A | A | A | A | A | A | A |
| Glue extrusion distance (mm) | | - | | - | | - | - | - | - | - | - | - | - |

**[Table 2]**

| | Comparative Example | | | | | |
|---|---|---|---|---|---|---|
| | 1 | 2 | 3 | 4 | 5 | 6 |
| Total tape thickness (µm) | 60 | 60 | 40 | 32 | 32 | 32 |
| Glue thickness (µm) | 30 | 30 | 10 | 2 | 2 | 2 |
| Slippage distance (mm) | 1.4 | 1.8 | 2.3 | 1.8 | 0.1 | 0.2 |
| Glue extrusion prevention | B | B | B | B | B | B |
| Glue extrusion distance (mm) | 3.50 | 3.90 | 3.50 | 3.00 | 0.10 | 0.20 |

While the present invention has been described in detail and with reference to the specific embodiments thereof, it will be apparent one skilled in the art that various changes and modifications can be made therein without departing from the spirit and scope thereof.
The present application is based on Japanese Patent Application No.2010-243324 filed on October 29, 2010, and the entire contents thereof are incorporated herein by reference. All references cited herein are incorporated in their entirety too.

## Claims

1. A pressure-sensitive adhesive tape for a battery, comprising a substrate; and
a pressure-sensitive adhesive layer laminated on at least one surface of the substrate,
wherein the pressure-sensitive adhesive layer contains a rubber component in the content of 70 wt% or more, and the rubber component has a weight average molecular weight of 300,000 to 5,000,000, and
wherein the pressure-sensitive adhesive layer is laminated at an inner portion of 0.5 mm or more from both edges of the substrate, with a thickness of 1 to 25 µm.

2. The pressure-sensitive adhesive tape for a battery according to claim 1, wherein the rubber component comprises a polyisobutylene rubber.

3. The pressure-sensitive adhesive tape for a battery according to claim 1, wherein the pressure-sensitive adhesive tape is attached to an electrode terminal and/or an electrode plate end.

4. The pressure-sensitive adhesive tape for a battery according to claim 1, wherein the pressure-sensitive adhesive tape is attached to a portion of a separator with which the electrode plate end comes in contact.
